# EUROPEAN PATENT SPECIFICATION

(11) **EP 0 682 758 B1**
(45) Date of publication and mention of the grant of the patent: **26.08.1998**
(21) Application number: 94907025.4
(22) Date of filing: 27.01.1994
(51) Int. Cl.: F16L 13/14, F16L 47/00, B21D 39/20, B29C 65/66

(54) **A METHOD OF MAKING A PIPE CONNECTION AND A TOOL SUITABLE FOR USE WHEN CARRYING OUT THE METHOD**
VERFAHREN ZUM HERSTELLEN VON ROHRVERBINDUNGEN UND WERKZEUG ZUM AUSFÜHREN DIESES VERFAHRENS
PROCEDE DE PRODUCTION D'UN RACCORDEMENT DE TUYAU, ET OUTIL APPROPRIES LORS DE LA MISE EN OEUVRE DU PROCEDE

(30) Priority: 05.02.1993 SE 9300365
(43) Date of publication of application: 22.11.1995
(73) Proprietor: WIRSBO BRUKS AKTIEBOLAG, S-730 61 Virsbo (SE)
(72) Inventor: LUNDEQUIST, Yngve, S-730 61 Virsbo (SE); SÖRBERG, Bengt, S-736 31 Kungsör (SE); WILD, Mikael, S-730 61 Virsbo (SE)
(74) Representative: Nilsson, Karl Ingvar
(86) International application number: SE9400059
(87) International publication number: WO9418486

(56) References cited:
- US-A- 924 049
- US-A- 4 065 953

## Description

The present invention relates to a method according to the preamble of Claim 1. The invention also relates to a tool according to the preamble of Claim 5.

Methods of the aforedefined kind have earlier been proposed for use together with plastic pipes which have a memory capacity, by which is meant plastic pipes which automatically strive to return essentially to their original shape and form after having been expanded. One example in this regard is found in pipes that are manufactured from cross-linked polyolefins, and particularly pipes that are manufactured from cross-linked polyethylene, such as so-called PEX-pipes, which possess an active memory capacity at temperatures as low as room temperature. Pipes of this nature are joined together by widening one end of a pipe and inserting into the widened pipe-end a flanged connector which forms part of a pipe-connecting piece, normally made of metal, and which is retained in said pipe-end until the pipe has shrunk to an extent at which it is able to firmly hold the connecting piece. Optionally, a clamping sleeve made of elastic material, for instance metal or plastic, which may be the same plastic material as that from which the pipe is made, is expanded and shrunk over the pipe-end, in order to enhance further the holding and sealing pressure at the pipe connecting region. The clamping sleeve can be expanded at the same time as the pipe-end is expanded, with the clamping sleeve in position around said pipe-end. The pipe-end is normally expanded by means of a mechanically, or optionally pneumatically or hydraulically operated expander tool of the kind which includes a number of jaws which can move radially in relation to a centre axis, between a retracted position, in which the jaws lie close together, and an outer, pipe-expanding position, said jaws having outer jaw surfaces which are delimited by mutually opposing jaw edges and are intended for engagement with the inner surface of said pipe-end and which are at least essentially circular-arcuate in shape when seen in cross-section.

One drawback with those pipe connecting methods and pipe expander tools known hitherto and being of the kind described in the introduction is that they sometimes fail to provide a sufficiently tight joint. The problem of an insufficiently tight joint is particularly accentuated within a relatively short period of time, normally in the order of a few hours, after making the joint, and then particularly when the joint region is subjected to bending stresses.

One object of the present invention is to provide a novel and advantageous pipe connecting method in which the aforesaid drawback is eliminated, at least to a substantial degree.

To this end, it is proposed that when practicing a method according to the preamble of Claim 1, promontories are formed from the pipe material on the inner surface of the pipe-end as the pipe-end is expanded, which promontories breakup or interrupt the contact zones between the inner surface of said pipe-end and the outer jaw surfaces in at least the region of said jaw edges in the expanding state of the jaws. This will effectively prevent the jaw edges from scoring or grooving the entire inner surface of the pipe-end. Fluids that pass under pressure through the pipe tend to pass along any score-lines or grooves that are formed and therewith penetrate through the pipe connection. The novel method enables a well-sealed pipe connection to be made more quickly than is otherwise possible, for instance so as to enable the connection to be tested under pressure and to enable a pipeline which incorporates the pipe connection to be taken into use. An advantage is afforded when the beads are formed in those regions which, after inserting the connector sleeve into the pipe-end, cover a flange which projects radially out from the connector sleeve and in which regions a seal is thus established most quickly between the connector sleeve and the inner surface of the pipe-end.

In the method according to the invention there is advantageously used a pipe expanding tool having movable jaws, whose outer jaw surfaces intended for engagement with the inner surface of said pipe-end include recesses in at least the region of said jaw edges. When the tool is used to expand the end of a pipe, the pipe material will penetrate into and completely or partially fill the recesses, therewith forming promontories or beads on the inner surface of said pipe-end, these beads causing interruptions in the score-lines that are liable to be formed by the jaw edges on the inner surface of the pipe-end during the final stage of the pipe-end expansion process. The tool thus enables a pipe-end to be expanded in a manner which enables an effective seal to be achieved relatively quickly between the pipe-end and a connector sleeve inserted thereinto, said connector sleeve forming part of a pipe-connecting piece. From a manufacturing aspect, among other things, the recesses may have the form of grooves or parts of grooves in the outer jaw surfaces which are intersected by the jaw edges. Since the problematic effect of the jaws on the inner surface of the pipe-end is concentrated to the area of contact between said inner surface and the jaw edges, the depth of the grooves or groove-parts may advantageously decrease away from said jaw edges, for instance so that the largest possible part of the outer jaw surfaces will be used to expand the pipe-end. In this context it may be mentioned that US-A-4 065 953 discloses an expanding tool for steel pipes formed with a spiral welded seam. The expanding jaws or segments are provided with complementary spiral slots to avoid contact between the segments and the spiral welded seam.

The application also discloses a pipe-connecting piece which is particularly suited for use in conjunction with the inventive method. This connecting piece includes at least one connector sleeve which is intended to be inserted into an expanded pipe-end. The sleeve has a section which has an outer diameter that exceeds the inner diameter of the unexpanded pipe and includes a flange which projects out radially from said section. The pipe-connecting piece is characterized in that said sleeve-section forms an axially inward part of the connector sleeve; and in that this inward part connects with an axially outer, tubular part which has an outer diameter which is at least generally equal to the inner diameter of the unexpanded plastic pipe, and a length which is at least equal to, and preferably 1-2 times greater than the inner diameter of the unexpanded plastic pipe. As a result of this configuration of the pipe-connecting piece, bending stresses that act in the pipe connecting region will act on the pipe essentially solely in the region of the outer end of the axially outer part of the connector sleeve. Stretching and other movements in the pipe wall will thus be concentrated to the region of said outer end, whereas engagement between the flange or flanges on the connector sleeve and the pipe wall will remain unaffected. Particular advantage is afforded when the connector sleeve has only one flange, so that the shrinkage or contraction forces occurring in said pipe-end will be concentrated essentially to a restricted area and result in greater sealing pressure.

The invention will now be described in more detail with reference to the accompanying drawings, in which
- Figure 1: is an axial section view of a pipe connection made by the method of the present invention, wherein the upper half of the Figure illustrates the pipe-end and an external clamping sleeve in a shrunk condition, while the bottom half of the Figure illustrates an expanded but not yet shrunken pipe-end and external clamping sleeve;
- Figure 2: is an axial section view illustrating a T-shaped pipe-connecting piece;
- Figure 3: illustrates in larger scale the ringed area in Figure 2;
- Figure 4: is an axial section view illustrating a front part of an expanding tool;
- Figure 5: is an axial section view illustrating an outer part of the tool shown in Figure 4, with the jaws separated;
- Figures 6 and 7: are perspective views which illustrate an outer part of the tool shown in Figure 4 with the jaws retracted and expanded respectively;
- Figure 8: is a cross-sectional view of the jaws in their mutually retracted and expanded positions respectively; and
- Figures 9 and 10: are perspective views of a first and a second exemplifying embodiment of a jaw included in the tool.

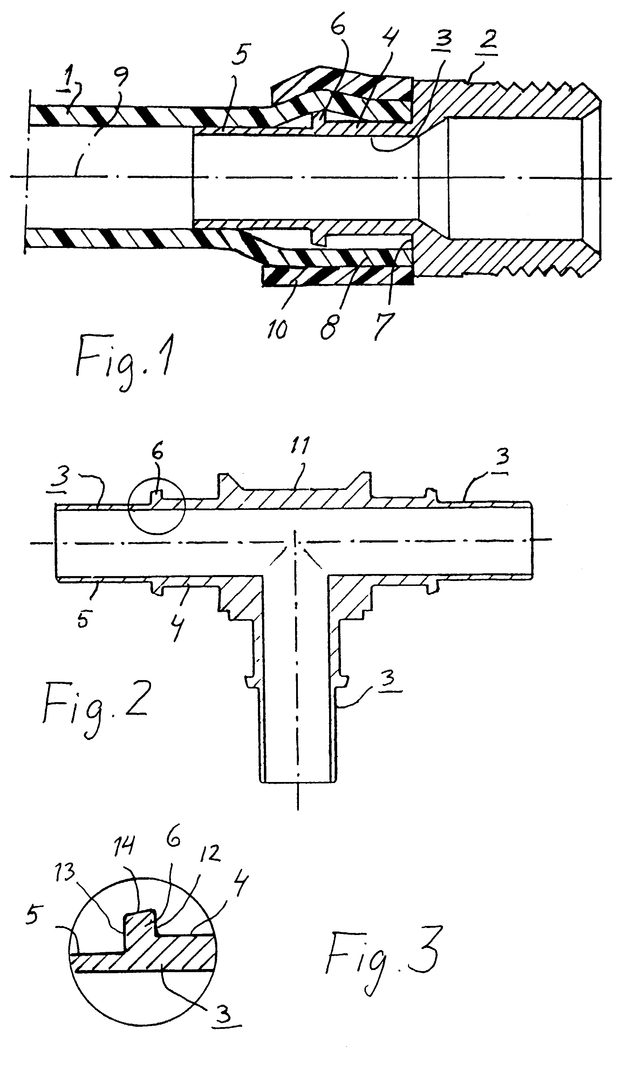

Figure 1 illustrates a pipe 1 which is comprised of a plastic material having memory properties, for instance cross-linked polyethylene (PEX-piping), and a metal pipe-connecting piece 2. The pipe-connecting piece 2 includes a connector sleeve, generally referenced 3, which comprises an axially inward part 4 and an axially outward part 5. The inward part 4 is on its end that lies proximal to the axially outward part 5 provided with a radially projecting flange 6 and is terminated at its opposite end with a radial abutment surface 7. The connector sleeve 3 is inserted fully into an expanded end 8 of the pipe 1, the geometric axis of which is indicated at 9. The inward part 4 has an outer diameter which exceeds the inner diameter of the unexpanded pipe 1, while the outward part 5 of the connector sleeve has an outer diameter which essentially coincides with the inner diameter of the unexpanded pipe 1. An elastic clamping ring 10 made, for instance, from the same material as the pipe 1, is mounted on the pipe-end 8. In its relaxed state, the clamping ring 8 has an inner diameter which corresponds to the outer diameter of the unexpanded pipe 1.

When establishing the pipe connection shown in Figure 1, the pipe-end 8 and the surrounding clamping ring 10 are expanded simultaneously to the state shown beneath the axis line 9 in Figure 1, by means of a jaw-equipped expander tool of the kind described below. The connector sleeve 3 is then immediately inserted into the pipe-end 8, until the abutment surface 7 is in abutment with the pipe-end 8 and with the clamping ring 10. The pipe-end 8 and the clamping ring 10 then shrink or contract automatically, so as to obtain sealing contact between the inner surface of the pipe-end 8 and the flange 6 in particular. A sealing contact is also obtained between the inner surface of the pipe-end 8 and the outer surface of at least the axially inward part 4 of the connector sleeve (as shown in Figure 1 above the axis line 9).

The pipe-connecting piece 2 illustrated in Figure 1 is provided with an external screw thread on that end which is opposite to the connector sleeve 3, so as to enable the connecting piece to be screwed to a connecting part provided with a corresponding internal screw thread. Naturally, many other connecting piece embodiments are conceivable. For instance, a connecting piece may have the form of a pipe-bend with identical connecting sleeves at opposite ends thereof, or may have the form of a T-pipe 11 with three identical connector sleeves 3, as shown in Figure 2. The connector sleeves 3 in Figure 2 are similar to the connector sleeves 3 in Figure 1. Figure 3 shows the ringed area in Figure 2 in larger scale. It will be seen from Figure 3 that the sole flange 6 on the connector sleeves 3 is located at the junction between the sleeve parts 4 and 5. The height of the flange 6 above the outer surface of the sleeve part 4 is smaller than the thickness of the wall of the plastic pipe 1. As will also be seen from Figure 3, the flange 6 has axially inward and outward defining surfaces 12 and 13 which extend generally at right angles to the longitudinal axis 9 of the connector sleeve, and a radially outer defining surface 14 which slopes outwards from the surface 13 towards the surface 12. The defining surface 14 may slope at an angle between 10-20°, preferably at an angle of about 15°. The flange will preferably have a relatively small width, for instance a width which is equal to the height of the flange, so as to achieve a relatively high contact pressure when the pipe-end 8 shrinks or contracts around the connector sleeve 3.

As before mentioned, the axially outward sleeve part 5 has an outer diameter which corresponds essentially to the inner diameter of the unexpanded pipe 1, and has a length which is at least equal to, and suitably 1-2 times the inner diameter of the unexpanded plastic pipe 1. Because of the outward sleeve part 5, any bending or flexing movements to which the pipe may be subjected in the pipe connecting region will occur at the axially outer end of the sleeve part 5 at a distance from the flange 6 such as to ensure that the seal achieved with the pipe connection will not be affected deleteriously by these bending or flexing movements.

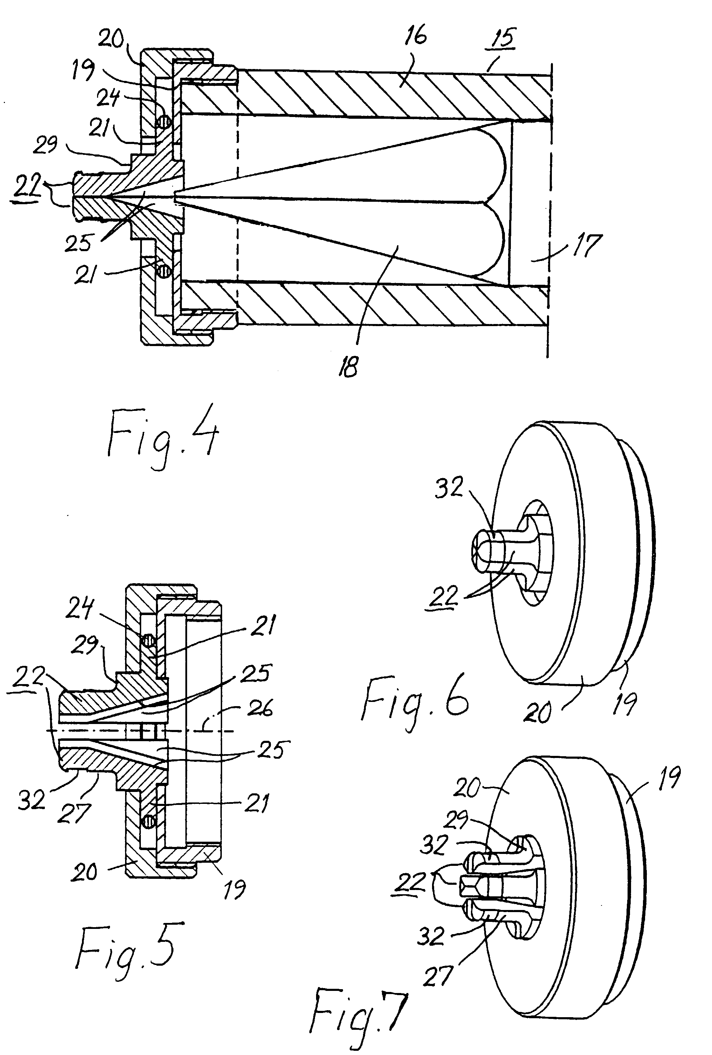

Figures 4-10 illustrate the significant parts of a tool which is referenced generally 15 (Figure 4) and which can be used conveniently to expand the pipe-end 8 in conjunction with establishing a pipe connection of the kind shown above the axis line 9 in Figure 1.

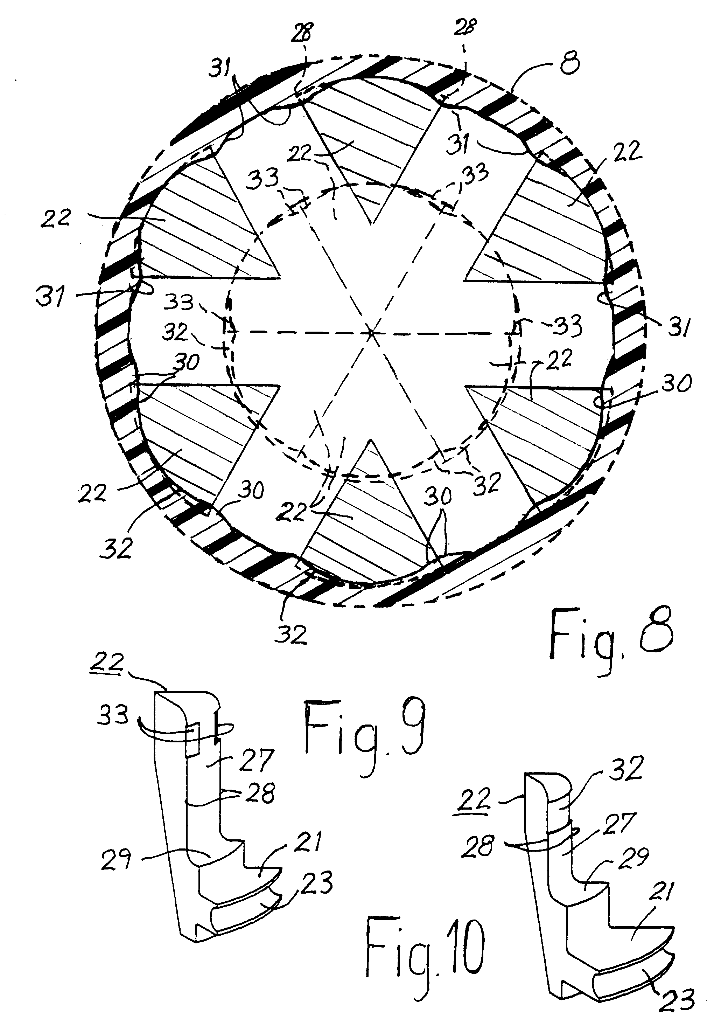

The tool 15 includes a cylindrical casing 16, wherein a piston 17 or the like having a pointed front end of hexagonal cross-section can be moved reciprocatingly by means of a mechanical, an electrical, a hydraulic or a pneumatic drive arrangement not shown. The front of the casing 16 has an inner and an outer cover 19, 20 respectively which can be screwed onto the casing 16 and which are provided with central openings. Radial parts 21 of jaws 22 are received between the covers 19, 20 in a manner which will permit the jaws 22 to move radially, but not axially, in relation to the cylindrical casing 16. The parts 21 are provided with peripheral grooves 23 (Figures 9 and 10) which are intended to receive an annular spring 24 which surrounds the jaws and which endeavours to hold the jaws 22 in their retracted position shown in Figure 4. The tool is expanded by moving the piston 17 forwardly from its withdrawn position shown in Figure 4, wherewith the pointed end 18 of the piston engages bevelled surfaces 25 on the jaws 22 and forces the jaws apart, for instance to the expanded position shown in Figures 5 and 7. The jaws 22, which in the illustrated case are six in number, therewith move radially outwards in relation to a tool centre axis referenced 26 in Figure 5. The jaws 22 have outer jaw surfaces 27, which when seen in cross-section at right angles to the axis 26 are at least generally arcuate in shape. The surfaces 27 are delimited by opposing jaw edges 28 and when the jaws 22 are in their mutually retracted position shown in Figures 4 and 6, the surfaces 27 will together define a generally cylindrical surface.

When expanding the pipe-end 8 with the aid of the tool illustrated in Figures 4-10, the mutually retracted jaws 22 are inserted into the pipe-end 8 until stop surfaces 29 on the jaws 22 come into contact with the outermost edge of the pipe-end. The piston 17 is then moved forwards, so that the pointed piston-end 18 engages the jaw surfaces 25 and separates the jaws 22, for instance to the position shown in Figures 5 and 7, therewith expanding the pipe-end 8 and also a clamping sleeve 10 on said pipe-end when such a sleeve is used. The piston 17 is then retracted and the jaws 22 are moved to their mutually retracted positions under the action of the spring 24, whereupon the jaws 22 are withdrawn from the pipe-end 8 and a connector sleeve 3 of a connecting piece 2 or 11 is inserted without delay into the expanded pipe-end, which then shrinks or contracts so as to firmly hold the connecting piece. When expanding a pipe-end with a tool of this nature, the jaw edges 28 tend to score the inner surface of the pipe-end 8 in the final stage of the expansion process. No effective seal can be obtained along these score lines, or at least not until a long period of time has lapsed. With the intention of eliminating this drawback, the inner surface of the pipe-end 8 is provided with promontories 30, 31 (Figure 8) which in the expanded position of the jaws 22 function to interrupt the contact zones between the inner surface of the pipe-end and the jaw surfaces 27, at least in the region of said jaw edges 28. The promontories are shown in Figure 8 and are formed by providing the jaw surfaces 27 with recesses or grooves into which the pipe wall is able to penetrate as the pipe-end 8 expands. The recesses or grooves may extend either across the whole of the jaw surface 27, from one jaw edge 28 to the other, as illustrated at 32 in Figures 6, 7 and 10 and also in the bottom half of Figure 8, or may be disposed in the jaw surface 27 solely in the region of the jaw edges 28, as shown at 33 in Figure 9 and uppermost in Figure 8. The depths of the grooves 32 or groove-parts 33 may decrease in a direction away from the jaw edges 28, as illustrated. The grooves or groove-parts have a width which conveniently slightly exceeds the width of the flange 6 of the connecting piece 2 and are so positioned in relation to the stop surfaces 29 as to cover the flange 6 on a connecting piece inserted into the expanded pipe-end 8.

Figure 8 shows in broken lines the jaws 22 retracted to a position in which they can be inserted into the end of the unexpanded pipe 1. The extended position of the jaws 22 in which they act expandingly on a pipe-end 8 is shown in full lines in Figure 8, in which only the inner wall portion of the pipe is shown. In the upper part of Figure 8, the recesses 33 are shown to comprise groove-parts which extend only across a part of the jaw width and the depths of which increase in a direction towards the jaw edges 28. When the pipe is expanded, these grooves 33 cause ridges or beads to form locally in the region of the contact zones between the jaw edges 28 and the inner surface of the pipe-end 8. In the lower part of Figure 8, the recesses 32 are shown to comprise grooves which extend across the full width of the jaws and the depths of which increase towards the sides 28 of respective jaws. As the pipe is expanded, these grooves 32 will form ridge-like promontories 30 which have a greatest height in the region of the contact zones between the jaw edges 28 and the inner surface of the pipe-end 8.

As will be understood, the invention is not restricted to the aforedescribed and illustrated exemplifying embodiments thereof, and that modifications and changes can be made within the scope of the inventive concept as defined in the following Claims. For instance, the pipe-connecting piece may be made of material other than metal, for instance a suitable polymeric, ceramic or metal-ceramic material, and may include more than one flange 6. The jaws 22 may be provided with a plurality of mutually sequential grooves or groove-parts 32, 33 as seen in the direction of the axis 26.

## Claims

1. A method of making a pipe connection between one end (8) of a pipe (1) made of a plastic material that has memory properties and a connector sleeve (3) of a connecting piece (2; 11) that includes at least one such connector sleeve, wherein the connector sleeve has along at least one part (4) of its length an outer diameter which exceeds the inner diameter of the pipe-end (8) and also includes a flange (6) which projects radially outwards from said part (4), said method comprising expanding the pipe-end to an inner diameter which exceeds the outer diameter of the flange with the aid of an expanding tool (15) of the kind which includes a number of jaws (22) which are movable radially in relation to a centre axis (26) between a mutually retracted position and an outer expanded position and which include outer jaw surfaces (27) which are intended for engagement with the inner surface of the pipe-end (8) and which, as seen in cross-section, have an essentially circular-arcuate shape and are delimited by opposing jaw edges (28), and inserting the connector sleeve (3) including said flange into the expanded pipe-end prior to shrinking or contracting the pipe end to an inner diameter which is smaller than the outer diameter of said flange, **characterized** by forming on the inner surface of the pipe-end (8) during the pipe end expanding process inwardly extending promontories (30;31) which interrupt the contact zones between the inner surface of the pipe-end and the outer jaw surfaces (27) at least in the region of said jaw edges (28) in the expanded state of the jaws (22).

2. A method according to Claim 1, **characterized** by forming said promontories (30; 31) in those regions which cover the flange (6) that extends radially out from the connector sleeve (3) subsequent to said sleeve having been inserted into said pipe-end (8).

3. A method according to Claim 1 or 2, **characterized** by using a tool having jaws, the outer jaw surfaces (27) of which present recesses (32; 33) in at least the region of said jaw edges (28), preferably formed by grooves or groove-parts provided in the outer jaw surfaces (27) and intersecting said jaw edges (28).

4. A method according to Claim 3, **characterized** by using a tool, in which the depths of the grooves (32) or the groove-parts (33) decrease in a direction from said jaw edges (28).

5. A tool for expanding a pipe-end (8), said tool comprising a number of jaws (22) which are movable radially in relation to a centre axis between a mutually retracted position and an outer pipe-expanding position and which are provided with outer jaw surfaces (27) which are delimited by mutually opposing jaw edges (28) and intended for engagement with the inner surface of the pipe-end and which have a generally circular-arcuate shape when seen in cross-section, **characterized** in that said outer jaw surfaces (27) present recesses (32; 33) formed by grooves or groove-parts provided in the outer jaw surfaces (27) and intersecting said jaw edges (28), wherein the depths of the grooves (32) or the groove-parts (33) decrease in a direction from said jaw edges (28).

## Patentansprüche

1. Verfahren zur Herstellung einer Rohrverbindung zwischen einem Ende (8) eines Rohres (1) aus Plastikmaterial mit Memoryeigenschaften und einer Verbindungshülse (3) eines Verbindungsstückes (2; 11), welches wenigstens eine derartige Verbindungshülse aufweist, wobei die Verbindungshülse wenigstens über einen Teil (4) ihrer Länge einen Außendurchmesser besitzt, der größer ist als der Innendurchmesser des Rohrendes (8), und wobei der Teil (4) außerdem einen Flansch (6) aufweist, der radial von diesem Teil (4) nach außen vorsteht, wobei das Verfahren die folgenden Schritte aufweist: es wird das Rohrende auf einen Innendurchmesser aufgeweitet, der größer ist als der Außendurchmesser des Flansches; die Aufweitung erfolgt mittels eines Aufweitwerkzeugs (15), welches mehrere Backen (22) aufweist, die radial gegenüber einer Mittelachse (26) zwischen einer zurückgezogenen Stellung und einer Spreizstellung beweglich sind, wobei die Backen äußere Oberflächen (27) aufweisen, die an der inneren Oberfläche des Rohrendes (8) angreifen und die, im Querschnitt betrachtet, eine im wesentlichen kreisbogenförmige Gestalt besitzen und durch zwei gegenüberliegende Backenränder (28) begrenzt sind; es wird die Verbindungshülse (3) mit dem Flansch in das aufgeweitete Rohrende eingeschoben, bevor dieses Rohrende schrumpft oder sich auf einen Innendurchmesser zusammenzieht, der kleiner ist als der Außendurchmesser des Flansches,
dadurch gekennzeichnet, daß die inneren Oberfläche des Rohrendes (8) während der Aufweitung des Rohrendes mit nach innen verlaufenden Vorsprüngen (30; 31) versehen wird, die die Berührungszonen zwischen der inneren Oberfläche des Rohrendes und den äußeren Backenoberflächen (27) wenigstens im Bereich der Backenränder (28) unterbrechen, wenn die Backen (22) in ihrer Spreizstellung befindlich sind.

2. Verfahren nach Anspruch 1,
dadurch gekennzeichnet, daß die Vorsprünge (30; 31) in jenen Bereichen ausgebildet werden, die den Flansch (6) überdecken, der radial von der Verbindungshülse (3) vorsteht, wobei diese Vorsprünge geformt werden, nachdem die Hülse in das Rohrende (8) eingeschoben ist.

3. Verfahren nach den Ansprüchen 1 oder 2,
dadurch gekennzeichnet, daß ein Werkzeug benutzt wird, das Backen aufweist, deren äußere Backenoberflächen (27) Ausnehmungen (32; 33) in wenigstens dem Bereich der Backenränder (28) aufweisen, und diese Ausnehmungen vorzugsweise von Nuten oder Nutabschnitten in den äußeren Backenoberflächen (27) gebildet werden, die die Backenränder (28) schneiden.

4. Verfahren nach Anspruch 3,
dadurch gekennzeichnet, daß ein Werkzeug benutzt wird, bei dem die Tiefe der Nuten (32) oder der Nutabschnitte (33) in Richtung von den Backenrändern (28) abnimmt.

5. Werkzeug zum Aufweiten eines Rohrendes (8), wobei das Werkzeug mehrere Backen (22) aufweist, die radial in bezug auf die Mittelachse zwischen einer zurückgezogenen und einer äußeren Rohraufweit-Stellung beweglich sind, wobei die Backen mit äußeren Backenoberflächen (27) versehen sind, die von einander gegenüberliegenden Backenrändern (28) begrenzt sind und in Eingriff mit der inneren Oberfläche des Rohrendes gelangen, das eine allgemein kreisbogenförmige Gestalt, im Querschnitt betrachtet, aufweist,
dadurch gekennzeichnet, daß die äußeren Backenoberflächen (27) Ausnehmungen (32; 33) aufweisen, die von Nuten oder Nutabschnitten gebildet werden, welche in den äußeren Backenoberflächen (27) ausgebildet sind und die Backenränder (28) schneiden, wobei die Tiefe der Nuten (32) oder der Nutabschnitte (33) in Richtung von den Backenrändern (28) abnimmt.

## Revendications

1. Procédé de production d'un raccordement de tuyau entre une extrémité (8) d'un tuyau (1) fabriqué en une matière qui a des propriétés de mémoire et un manchon de raccord (3) d'un dispositif de raccordement (2 ; 11) qui comprend au moins un manchon de raccord de ce type, dans lequel le manchon de raccord a, le long d'au moins une partie (4) de sa longueur, un diamètre extérieur qui dépasse le diamètre intérieur de l'extrémité de tuyau (8) et comporte aussi une bride (6) qui dépasse radialement vers l'extérieur de ladite partie (4), ledit procédé comprenant l'expansion de l'extrémité de tuyau, jusqu'à un diamètre intérieur qui dépasse le diamètre extérieur de la bride, au moyen d'un outil d'expansion (15) du type qui comprend un certain nombre de mâchoires (22) mobiles, radialement par rapport à un axe central (26), entre une position dans laquelle elles sont mutuellement rentrées et une position expansée extérieure, lesquelles ont des surfaces extérieures de mâchoires (27) destinées à venir en prise avec la surface intérieure de l'extrémité de tuyau (8) et qui, comme on peut le voir sur une section transversale, ont essentiellement une forme d'arc circulaire et sont délimitées par des bords de mâchoires en regard (28), et l'introduction du manchon de raccord (3) comprenant ladite bride dans l'extrémité expansée du tuyau avant le rétrécissement ou la contraction de l'extrémité de tuyau, jusqu'à un diamètre intérieur plus petit que le diamètre extérieur de ladite bride, caractérisé par la formation sur la surface intérieure de l'extrémité de tuyau (8) pendant le procédé d'expansion de l'extrémité de tuyau, d'aspérités (30 ; 31) s'étendant vers l'intérieur lesquelles interrompent les zones de contact entre la surface intérieure de l'extrémité de tuyau et les surface extérieures de mâchoires (27), au moins dans la région desdits bords de mâchoires (28), dans l'état expansé de mâchoires (22).

2. Procédé selon la revendication 1, caractérisé par la formation desdites aspérités (30 ; 31) dans les régions qui couvrent la bride (6) s'étendant radialement vers l'extérieur du manchon de raccord (3) après que ledit manchon a été introduit dans ladite extrémité de tuyau (8).

3. Procédé selon l'une des revendications 1 ou 2, caractérisé par l'emploi d'un outil comprenant des mâchoires, dont les surfaces extérieures de mâchoires (27) présentent des évidements (32 ; 33) dans au moins la région desdits bords de mâchoires (28), formés de préférence par des rainures ou des parties de rainures prévues dans les surfaces extérieures de mâchoires (27) et coupant lesdits bords de mâchoires (28).

4. Procédé selon la revendication 3, caractérisé par l'emploi d'un outil, dans lequel les profondeurs des rainures (32) ou des parties de rainures (33) diminuent dans une direction qui s'éloigne desdits bords de mâchoires (28).

5. Outil pour l'expansion d'une extrémité de tuyau (8), ledit outil comprenant un certain nombre de mâchoires (22) lesquelles sont mobiles dans une direction radiale par rapport à un axe central, entre une position mutuellement rentrée et une position extérieur d'expansion de tuyau et lesquelles sont pourvues de surfaces extérieures de mâchoires (27) qui sont délimitées par des bords de mâchoires mutuellement en regard (28) et destinés à venir en prise avec la surface intérieure de l'extrémité de tuyau et qui ont une forme générale d'arc circulaire vue sur une section transversale, caractérisé en ce que lesdites surfaces extérieures de mâchoires (27) présentent des évidements (32 ; 33) formés par des rainures ou parties de rainures prévues dans les surfaces extérieures de mâchoire (27) et coupant lesdits bords de mâchoires (28), dans lequel la profondeur des rainures (32) ou des parties de rainures (33) diminuent dans une direction qui s'éloigne desdits bords de mâchoire (28.
